(19) **Europäisches Patentamt**

**European Patent Office**

**Office européen des brevets**

(11) Veröffentlichungsnummer: **0 520 524 B1**

(12) **EUROPÄISCHE PATENTSCHRIFT**

(45) Veröffentlichungstag der Patentschrift: **06.12.95**

(51) Int. Cl.6: **C22B 19/30**, C22B 7/00, C22B 1/248

(21) Anmeldenummer: **92201280.2**

(22) Anmeldetag: **06.05.92**

(54) **Zinkentfernung aus Phosphatierschlämmen.**

(30) Priorität: **30.05.91 DE 4117716**

(43) Veröffentlichungstag der Anmeldung:
**30.12.92 Patentblatt 92/53**

(45) Bekanntmachung des Hinweises auf die
Patenterteilung:
**06.12.95 Patentblatt 95/49**

(84) Benannte Vertragsstaaten:
**BE DE ES FR GB IT**

(56) Entgegenhaltungen:
| | |
|---|---|
| EP-A- 0 131 848 | DE-A- 3 719 583 |
| DE-A- 3 925 838 | FR-A- 2 317 221 |
| US-A- 3 653 875 | US-A- 4 123 257 |

(73) Patentinhaber: **METALLGESELLSCHAFT Aktiengesellschaft**
**Postfach 10 15 01,**
**Reuterweg 14**
**D-60015 Frankfurt (DE)**

(72) Erfinder: **Fennemann, Wolfgang**
**Schlinkenweg 16**
**W-6367 Karben (DE)**
Erfinder: **Kola, Rolf**
**Rossstrasse 130**
**W-4000 Düsseldorf (DE)**
Erfinder: **Jentsch, Dieter, Dr.**
**Mozartweg 2a**
**W-6070 Langen (DE)**

EP 0 520 524 B1

EP 0 520 524 B1

**Beschreibung**

Die Erfindung betrifft ein Verfahren zur Entfernung von Zink aus Phosphatierschlämmen bei erhöhten Temperaturen sowie unter reduzierenden Bedingungen und in Gegenwart von Zuschlagstoffen, sowie dessen Anwendung innerhalb des Wälzprozesses zur Aufarbeitung von Hüttenwerksreststäuben.

In der metallverarbeitenden Industrie ist die Phosphatierung mit Zinkphosphatlösung ein weitverbreitetes Verfahren. Die nach diesem Verfahren auf Metallen erzeugten Phosphatschichten dienen insbesondere zur Erleichterung des Gleitens und der spanlosen Kaltumformung sowie zum Korrosionsschutz und als Lackhaftgrund. Beim Einsatz von Phosphatierverfahren bildet sich neben der gewünschten Konversionsschicht auch ein Phosphatierschlamm, der regelmäßig aus den Behandlungsbädern entfernt werden muß. Der bei der Behandlung von Stahl und Eisen anfallende Schlamm hat in getrocknetem Zustand folgende Zusammensetzung: 2 - 20% Zn; 10 - 30% Fe; 30 - 45% $P_2O_5$. Werden Zinkoberflächen phosphatiert, beträgt der Zn-Gehalt im Schlamm etwa 38 - 45%. Neben diesen Hauptbestandteilen können je nach spezieller Zusammensetzung des Phosphatierbades noch geringe Mengen an Na, Mn, Ni, Ca, Cu, Co und andere Kationen vorhanden sein. In ebenfalls geringen Mengen können die Anionen $NO_3^-$, $Cl^-$ und $F^-$ enthalten sein.

Der Phosphatierschlamm sedimentiert im Phosphatierbad und besitzt eine Restfeuchte von 95 - 60%. Durch Abpressen kann diese auf 30 - 50% und durch Trocknen auf unter 10% reduziert werden.

Der verfahrensbedingte Anfall von Phosphatierschlamm ist mit Nachteilen verbunden. Zum einen wird durch ihn ein Teil der eingesetzten Chemikalien gebunden, zum andern muß er aufgrund seines Schwermetallgehaltes als Sonderabfall entsorgt werden. Es hat deshalb nicht an Versuchen gefehlt, Verfahren zu entwickeln, die es ermöglichen, aus dem Schlamm Wertstoffe zurückzugewinnen und dadurch die Abfallmenge zu verringern. So wird in DE-A-2629776 ein naßchemisches Aufbereitungsverfahren für Phosphatierschlämme beschrieben, das sich jedoch bisher wegen verfahrenstechnischer Schwierigkeiten und aus wirtschaftlichen Überlegungen nicht hat durchsetzen können. In der US-A-3653875 wird vorgeschlagen, nach einem alkalischen Aufschluß den anfallenden Feststoff reduzierend bei 500 - 1300°C zu behandeln und so das Zink zu gewinnen. Aus dem Rückstand kann Trinatriumphosphat ausgewaschen werden. Auch dieses Verfahren hat sich wegen der aufwendigen Mehrstufigkeit nicht etabliert.

Schließlich ist aus DE-A-39 25 838 ein Verfahren zur Entfernung von Zink und Phosphat (Wertstoffe) aus Phosphatschlämmen von Phosphatieranlagen bekannt, bei dem die Wertstoffe unter reduzierenden Bedingungen und bei erhöhter Temperatur in Gegenwart von $SiO_2$ in die Gasphase überführt und an separater Stelle niedergeschlagen werden. Die reduzierenden Bedingungen werden vorzugsweise durch Vermischen des Phosphatschlammes mit feinkörniger Kohle und/oder feinkörnigem Koks erzeugt. Die Arbeitstemperaturen sollten oberhalb 900°C, insbesondere oberhalb 1100°C liegen.

Aufgabe der Erfindung ist es, ein Verfahren bereitzustellen, durch das die in den Phosphatierschlämmen enthaltenen Wertstoffe Phosphor und Zink in wiederverwendbare Form überführt werden, das abwasserfrei arbeitet und insbesondere einfach in der Durchführung ist.

Die Aufgabe wird gelöst, indem man beim Verfahren der eingangs genannten Art die Phosphatierschlämme mit Zuschlagstoffen, die mit der Phosphorkomponente der Phosphatierschlämme bei erhöhter Temperatur schlackenartige (feste, nichtflüchtige) Eisen-, Kalzium- und/oder Bariumverbindungen zu bilden vermögen, vermischt und bei mindestens 800°C umsetzt, wobei man zur Bildung von Fe-Verbindungen mindestens ein Fe : P-Molverhältnis von 1,0 bei einer Reaktionstemperatur von ≤ 950°C, von 1,5 bei einer Reaktionstemperatur von 950 - 1050°C und 2,0 bei ≥ 1050°C und zur Bildung von Ca- und/oder Ba-Verbindungen ein Molverhältnis von Ca : P bzw. Ba : P von mindestens 1,5 einstellt.

Bei der thermisch reduzierenden Behandlung laufen je nach Zusammensetzung von Phosphatierschlamm, Zuschlagstoffen und Brennstoff/Reduktionsmittel verschiedene Reaktionen nebeneinander ab. Hierbei gibt es bevorzugte, nachrangige und temperaturabhängige Reaktionen, wodurch in Abhängigkeit von den Bedingungen unterschiedliche Mengen an Zuschlagstoff benötigt und unterschiedliche Schlackezusammensetzungen bzw. schlackeartige Zusammensetzungen erhalten werden. Es wurde gefunden, daß Ba in gleicher Weise reagiert wie Ca. Im gesamten nachstehenden Text steht Kalzium daher stellvertretend auch für Barium. Das angegebene Molverhältnis gilt für jeweils analysenreine Komponenten bei optimaler Versuchsführung und stellt Mindestwerte dar.

2

| Komponenten | | Reaktionsart | Molverhältnis Nr. 1 : Nr. 2 | Temperatur °C |
|---|---|---|---|---|
| Nr. 1 | Nr. 2 | | | |
| Ca | Si | vorrangig | 1,0 | 800 - 1300 |
| Fe | P | " | 1,0 | ≦ 1000 |
| Fe | P | " | 1,5 | 1000 - 1100 (Übergangsgebiet) |
| Fe | P | " | 2,0 | ≧ 1100 |
| Ca | P | nachrangig | 1,5 | 800 - 1300 |

Hieraus ergibt sich, daß
- bei Anwesenheit von Silizium dieses bevorzugt mit dem Kalzium reagiert. Wenn mithin Phosphat mit Kalzium bei gleichzeitiger Anwesenheit von Silizium gebunden werden soll, so ist ein entsprechend großer Kalziumüberschuß erforderlich.
- bei Bindung des im Phosphat enthaltenen Phosphors mit Eisen keinerlei Störung durch andere Komponenten erfolgt. Der Eisenbedarf steigt jedoch bei zunehmender Temperatur an.

Sämtliche angegebenen Molverhältnisse sind Mindestmengen. Durch verschiedene Einflüsse wie z. B. Reaktionsfreudigkeit der Zuschlagstoffe, Homogenität der Mischung, Zutrittsmöglichkeiten des Reaktionsmittels usw. kann es erforderlich sein, höhere Molverhältnisse einzustellen. Insbesondere bei Verwendung von Eisen als Zuschlagsstoff und nicht auszuschließenden Temperaturschwankungen empfiehlt es sich, sicherheitshalber vom höchsten stöchiometrischen Molverhältnis Fe : P = 2,0 auszugehen und einen zusätzlichen sicherheitszuschlag vorzunehmen. Die Fe-P-Verbindungen haben die Eigenschaft, sich mit steigender Temperatur in P-ärmere Verbindungen umzulagern und Phosphor freizusetzen. Vereinfacht kann man das wie folgt darstellen (Temperatur steigt in Pfeilrichtung):

$$FePO_4 \rightarrow FeP \rightarrow Fe_2P \rightarrow Fe_3P$$

In den meisten fällen liegen Gemische von zwei Verbindungen vor. $Fe_2P$ gibt unter Erhitzen keinen Phosphor ab. Die Bildung von $Fe_3P$ erfolgt nur bei ausreichendem Fe-Angebot.

Andere Komponenten vermögen sich ebenfalls am Reaktionsablauf zu beteiligen, wodurch sich die erforderlichen Zuschlagsmengen ändern können. Diese anderen Komponenten reagieren jedoch im allgemeinen nachrangig oder bilden weniger stabile Verbindungen, so daß deren Wirkung durch einen im Betriebsmaßstab üblicherweise einzustellenden Reaktionsmittelüberschuß automatisch mitberücksichtigt ist. So reagiert z. B. Aluminium tendenziell wie Silizium, so daß bei Anwesenheit großer Al-Mengen und bei Verwendung von Kalzium als Zuschlagsstoff der Ca-Zuschlag etwas höher eingestellt werden sollte.

Die Art des Zuschlagsstoffes richtet sich demgemäß auch nach der Anwesenheit und Menge von Begleitkomponenten. Wenn z.B. große Mengen $SiO_2$ vorliegen, wird man im allgemeinen kein Kalzium, sondern Fe als Zuschlagsstoff verwenden. Phosphatierschlämme enthalten in vielen Fällen Fe, so daß eine Teilabbindung des P mit Fe ohnehin stattfindet. In diesen Fällen kann der Zuschlagsstoff entsprechend reduziert werden.

Bei komplexen Systemen und Anwesenheit vieler unterschiedlicher und sich gegenseitig beeinflussender Bestandteile wird die erforderliche Zuschlagsstoffmenge zweckmäßigerweise experimentell im Laboratorium ermittelt. Je nach der im Betrieb gegebenen Dosiergenauigkeit wird ein entsprechender Übeschuß für die Produktion gewählt. Für eine Abschätzung der erforderlichen Zuschlagsstoffmengen können folgende generelle Regeln angewendet werden:
- Sofern Kalzium (bzw. äquivalente Mengen Barium) als Zuschlagsstoff Verwendung findet, ist bei Anwesenheit von Fe die Gesamt-P-Menge um den Betrag zu vermindern, welcher mit dem Fe vorrangig reagiert. Hierbei kann von folgendem Molverhältnis ausgegangen werden:

$$\leqq 950°C : Fe : P = 1,0$$
$$950 - 1050°C : Fe : P = 1,5$$
$$\geqq 1050°C : Fe : P = 2,0$$

Unabhängig von der beabsichtigten Reaktionstemperatur ist ein stöchiometrisches Verhältnis von Ca : P von mindestens 1,5 erforderlich. Hierbei ist zu berücksichtigen, daß gleichzeitig anwesendes Si im molaren Verhältnis von Ca : Si = 1,0 Kalzium verbraucht und Eisen entsprechend den obigen Ausführungen seinerseits im Phosphatschlamm enthaltenen Phosphor bindet, so daß die Zuschlagmenge an Kalzium entsprechend reduziert werden kann. Ein Sicherheitszuschlag von 10 bis 100% - je nach betrieblichen Gegebenenheiten - des Kalziumbedarfs ist empfehlenswert.

Aus dem vorstehenden ergibt sich folgendes:

Soll z.B. ein Phosphatierschlamm mit Gehalten von 18,0% P, 15,0% Fe und 0,5% Ca mit Kalk (Ca-Gehalt = 38,5%) bei 1100°C umgesetzt werden, wobei pro t Phosphatierschlamm 0,4 t minderwertiger Koks als Brennstoff und Reduktionsmittel mit 3% Si verbraucht werden, so ergibt sich bezogen auf 1 t Phosphatierschlamm bei Anwendung von 25% Überschuß ein Kalkbedarf von 366 kg (ber. als Ca) bzw. von 951 kg (ber. als $CaCO_3$, bei einem Ca-Gehalt von 38,5%).

- Sofern Fe als Zuschlagstoff dient, ist bei Anwesenheit von Ca die Gesamt-P-Menge um den Betrag zu mindern, welcher von dem Ca abgebunden werden kann. Bei gleichzeitiger Anwesenheit von Si ist dabei vorab der Ca-Gehalt um den Betrag zu mindern, welcher durch vorrangige Reaktion mit Si entsprechend einem Molverhältnis von Ca : Si = 1,0 verbraucht wird. Dabei ist die Zugabe eines Sicherheitszuschlages von 10 bis 100% bezogen auf die Gesamtphosphormenge zweckmäßig.

Soll z.B. ein Phosphatierschlamm mit Gehalten von 17,0% P, 11,0% Fe und 3% Ca mit einem Eisenoxid mit 68,5% Fe bei 1000°C umgesetzt werden, wobei pro Tonne Phosphatierschlamm 0,3 t Koks als Brennstoff und Reduktionsmittel mit 2,5% Si verbraucht werden, so ergibt sich bezogen auf 1 t Phosphatierschlamm bei Anwendung von 40% Fe-Überschuß bezogen auf die gesamte Phosphormenge ein Eisenoxidbedarf von 505 kg (ber. als Fe) bzw. von 738 kg Eisenoxid (mit einem Fe-Gehalt von 68,5%).

Soll z.B. ein Phosphatierschlamm mit Gehalten von 16,0% P und 8,0% Fe in einer Wälzanlage mitverarbeitet werden, welche üblicherweise 10 t/h Hüttenwerkstaub (23,0% Fe, 3,0% Ca, 1,5% Si), 1,7 t/h Sand (46,5% Si) und 3,0 t/h Koks (1,3% Fe, 3% Si) bei 1200°C durchsetzt, wobei ein Teil des Hüttenwerkstaubes durch Phosphatierschlamm ersetzt werden soll, so kann man wie folgt vorgehen:

a) Umrechnung aller relevanten Komponenten des Hüttenwerkstaubes auf eine Komponente, nämlich das Fe, wobei der zugegebene Sand (1,7 t/h) mitberücksichtigt wird.

Für 10 t Staub und 1,7 t Sand ergibt sich folgender rechnerischer Gehalt:

300 kg Ca

150 kg Si aus Hüttenwerkstaub

790 kg Si aus Sand (1,7 t/h . 46,5% Si)

90 kg Si aus Koks (3,0 t/h . 3,0% Si)

Zur Abbindung des Ca durch Si werden stöchiometrisch 210 kg Si benötigt. Die vorliegende Menge beträgt jedoch 1030 kg Si, so daß das gesamte Ca durch Si abgebunden wird und nicht für eine P-Abbindung infrage kommt.

Für eine P-Abbindung muß demnach nur der Fe-Gehalt betrachtet werden, so daß in diesem Fall eine Umrechnung der anderen Komponenten nicht in Betracht kommt.

b) Anfertigung einer Liste für verschiedene Mischungsverhältnisse von Phosphatierschlamm und Hüttenwerkstaub.

- Für 10% Phosphatierschlamm und 90% Hüttenwerkstaub ergibt sich folgendes Fe/P-Verhältnis:

|  | kg Fe | kg P |
|---|---|---|
| 1 t Phosphatierschlamm | 80 | 160 |
| 9 t Staub | 2070 | - |
| 3 t Koks | 39 | - |
| Gesamt | 2189 | 160 |

Fe : P-Molverhältnis = 39,20 : 5,17

P-Molverhältnis = 7,58

Erforderliches Fe : P-Molverhältnis = 2,0

$$\text{Fe-Überschuß} \quad \frac{100 \ (7,58 - 2,0)}{2,0} = 279\%$$

- Für 20% Phosphatierschlamm und 80% Hüttenwerkstaub ergibt sich folgendes Fe/P-Verhältnis:

|  | kg Fe | kg P |
|---|---|---|
| 2 t Phosphatierschlamm | 160 | 320 |
| 8 t Staub | 1840 | - |
| 3 t Koks | 39 | - |
| Gesamt | 2039 | 320 |

Fe :  P-Molverhältnis = 36,51 : 10,33

P-Molverhältnis = 3,53

Erforderliches Fe :  P-Molverhältnis = 2,0

$$\text{Fe-Überschuß} \quad \frac{100 \ (3,53 - 2,0)}{2,0} = 76,5\%$$

Eine Weiterführung der Berechnungen für andere Mischungsverhältnisse führt zu folgender Tabelle:

| Mischungsverhältnis | | Molverhältnis | Fe-Überschuß bei 1200°C |
|---|---|---|---|
| Phosphatierschlamm | Staub | Fe : P | % |
| 10% | 90% | 7.58 | 279 |
| 15% | 85% | 4,88 | 144 |
| 20% | 80% | 3,53 | 77 |
| 25% | 75% | 2,72 | 36 |
| 30% | 70% | 2,18 | 9 |
| 35% | 65% | 1,80 | - 10 |

Aus diesen Werten kann ggf. eine Grafik angefertigt und aus dieser für jeden gewünschten Fe-Überschuß das entsprechende Mischungsverhältnis abgelesen werden. So ergibt sich z.B., daß für einen gewünschten Fe-Überschuß von 100% gemäß obigem Beispiel ein Gemisch aus 18% Phosphatierschlamm (1,8 t) und 82% Staub (8,2 t) eingestellt werden muß.

Demzufolge setzt man die Phosphatierschlämme zur Bildung von Eisenverbindungen bei einer Reaktionstemperatur von mindestens 900°C um. Noch günstiger ist es, die Umsetzung bei mindestens 1000°C, insbesondere bei mindestens 1100°C, vorzunehmen. Mit steigender Temperatur steigt die Reaktionsgeschwindigkeit, so daß - auf eine vorhandene Anlage bezogen - auch die erzielbare Durchsatzleistung steigt.

Zur Bildung der schlackeartigen Eisenverbindung, insbesondere von möglichst konzentriertem Eisenphosphid, setzt man die Phosphatierschlämme vorteilhafterweise mit hocheisenhaltigen oxidischen Eisenverbindungen um. Geeignete Eisenverbindungen sind beispielsweise oxidische Eisenerze, Eisenoxide wie sie z.B. bei der Pyritröstung oder der Regenerierung salzsaurer oder schwefelsaurer Beizmittel erhalten werden. Auch kann die Umsetzung mit Walzenzunder oder Schrott erfolgen.

Eine besonders bevorzugte Ausführungsform der Erfindung besteht darin, die Phosphatierschlämme zur Bildung von schlackenartigen Eisenverbindungen mit Hüttenwerkstäuben umzusetzen. Derartige Stäube sind insbesondere deswegen gut geeignet, weil sie einerseits in hinreichend großen Mengen anfallen und andererseits neben Eisen Zink als Hauptbestandteil enthalten, das dann gemeinsam mit dem Zinkgehalt der Phosphatierschlämme verflüchtigbar ist.

Bei Verwendung von Ca oder Ba enthaltenden Zuschlagstoffen ist zu beachten, daß im aufzuarbeitenden Phosphatierschlamm eventuell vorhandenes Eisen vorrangig Phosphor verschlackt. D.h., sofern im Phosphatierschlamm auch Eisen enthalten ist, ist bei der Ermittlung des Ca- bzw. Ba-Bedarfs entsprechend einem Molverhältnis von mindestens 1,5 nur der nicht bereits durch das Eisen verschlackbare Phosphoranteil des Phosphatierschlammes in die Rechnung einzusetzen.

Eine weitere zweckmäßige Ausgestaltung des erfindungsgemäßen Verfahrens besteht darin, die vermischten Phosphatierschlämme/Zuschlagstoffe zu Pellets, Briketts oder ähnlichen Agglomeraten zu kompaktieren. Damit läßt sich insbesondere eine einfachere Handhabung der Einsatzstoffe und eine exaktere Dosierung erreichen. Insbesondere wird der Staubaustrag durch die Abgase weitgehend reduziert, so daß im Ergebnis ein reineres Zinkprodukt erhalten wird.

Weiterhin ist es vorteilhaft, die reduzierenden Bedingungen mit Hilfe von festem Brennstoff herzustellen. Besonders geeignete feste Brennstoffe sind Kohle, Koks, Koksgrus und dgl. Bei dieser Ausgestaltung der Erfindung ist es vorteilhaft, den festen Brennstoff mit den Phosphatierschlämmen und Zuschlagstoffen zu vermischen und insbesondere zu agglomerieren, da dann der Reduktionsprozeß nicht nur an der Oberfläche, sondern auch im Innern der Agglomerate erfolgt.

Besonders günstig ist es, das erfindungsgemäße Verfahren in den Wälzprozeß von Hüttenwerkstäuben zu integrieren. Diese Integration ist insofern mit beträchtlichem Vorteil verbunden, als beim Wälzprozeß sowohl Hüttenwerkstäube aufgearbeitet werden, die ausreichend hohe Eisengehalte aufweisen und als beim Wälzprozeß die besonders vorteilhaften hohen Temperaturen, verbunden mit den reduzierenden Bedingungen, vorliegen.

Der Einsatz des erfindungsgemäßen Verfahrens bietet den Vorteil, daß keine Abwässer entstehen, die zusätzlich gereinigt werden müßten. Auch ist der Verfahrensablauf einfach. Bereits in den Vorratsbunkern können der Phosphatierschlamm und die Zuschlagstoffe miteinander vermischt werden. Dabei sollten die Phosphatierschlämme so wenig Restfeuchte enthalten, daß sie rieselfähig sind, andernfalls würde bei zu hoher Restfeuchte ihr thixotropes Verhalten die Dosierung erschweren. Ein Neutralisieren der Schlämme am Anfallort ist nicht notwendig. Aus den Vorratsbunkern ist je nach Bauart des Reaktionsaggregats eine kontinuierliche oder diskontinuierliche Beschickung möglich. Es kommen bekannte Aggregate, z. B. Kurztrommel-, Etagen-, Drehrohr- oder Wirbelschichtofen zum Einsatz. Die Restfeuchte des Phosphatierschlamms kann im Reaktionsaggregat ausgetrieben werden. Eines zusätzlichen Aggregates bedarf es dazu nicht. Die eigentliche Reaktion verläuft oberhalb 800 °C quantitativ. Ist die Atmosphäre auch im Gasraum des Reaktionsaggregates reduzierend, so wird das Zink in elementarer Form verflüchtigt. Bei oxidierender Atmosphäre im Gasraum entweicht das Zink in Form von Zinkoxid. Die Abgase lassen sich gemäß dem Stand der Technik reinigen, so daß das verflüchtigte Zink bzw. Zinkoxid wiederverwertet werden kann und keine Schadstoffe in die Umwelt gelangen.

**Beispiele**

Die Versuche wurden in einem Röhrenofen durchgeführt. Die Probe wurde auf einem Schiffchen in den Ofen eingebracht und dort unter reduzierender Atmosphäre 2 h bei der jeweils eingestellten Temperatur belassen.

**Beispiel 1**

In dieser Versuchsreihe wurde Phosphatierschlamm mit reinem $Fe_2O_3$ und Kohle bei verschiedenen Temperaturen und Molverhältnissen Fe : P behandelt. Hierbei wurde der Fe-Eigengehalt des Phosphatierschlamms bei der Berechnung des Fe : P-Molverhältnisses mitberücksichtigt.

6

Tabelle 1

| Temperatur °C | Molverhältnis Fe : P | Verflüchtigung | |
|---|---|---|---|
| | | Zn[%] | $P_2O_5$[%] |
| 900 | 0,5 | 11 | 6 |
| | 1,0 | 21 | 2 |
| | 1,5 | 59 | 2 |
| | 2,0 | 74 | 2 |
| 1000 | 0,5 | 100 | 44 |
| | 1,0 | 90 | 2 |
| | 1,5 | 90 | 2 |
| | 2,0 | 100 | 0 |
| 1100 | 0,5 | 100 | 78 |
| | 1,0 | 100 | 50 |
| | 1,5 | 100 | 25 |
| | 2,0 | 100 | 0 |
| | 3,0 | 100 | 0 |
| 1200 | 0,5 | 100 | 78 |
| | 1,0 | 100 | 51 |
| | 1,5 | 100 | 26 |
| | 2,0 | 100 | 0 |

Bei 900 - 1000 °C reicht zur praktisch vollständigen P-Einbindung ein Fe : P-Molverhältnis von 1,0 aus, bei darüber hinausgehender Temperatur ist ein Molverhältnis von 2,0 erforderlich. Weiterhin fällt auf, daß bei 900 °C die Entzinkung mit zunehmender Fe-Menge ansteigt. Die Entzinkung wird auch bei 1000 °C vom Fe : P-Molverhältnis bestimmt, so daß ein Fe : P-Molverhältnis von ≧ 2,0 eingestellt werden sollte, wenn neben vollständiger P-Einbindung auch vollständige Zn-Verflüchtigung erreicht werden soll.

Die dabei anfallenden Rückstände stellen Fe-P-Legierungen dar und können in der Stahlindustrie eingesetzt werden. Sie können im Freien gelagert werden.

**Beispiel 2**

Bei diesen Versuchen wurde anstelle von reinem $Fe_2O_3$ als Zuschlagstoff Hüttenwerkstaub eingesetzt. Analog zum Wälzprozeß wurde außerdem Quarzsand in einer Menge von 20 Gew.-% bezogen auf die Masse von Phosphatierschlamm und Hüttenwerkstaub zugesetzt. Da beim Wälzverfahren neben Zn auch Pb durch Verflüchtigung gewonnen wird, wurde dessen Verhalten mitgeprüft.

EP 0 520 524 B1

Tabelle 2

| Temperatur °C | Molverhältnis Fe : P | Verflüchtigung | | |
|---|---|---|---|---|
| | | Zn[%] | $P_2O_5$[%] | Pb[%] |
| 1000 | 1,2 | 100 | 14 | 99 |
| | 1,5 | 100 | 2 | 100 |
| | 2,1 | 100 | 2 | 100 |
| 1100 | 1,2 | 100 | 38 | 99 |
| | 1,5 | 100 | 17 | 100 |
| | 1,8 | 100 | 5 | 100 |
| | 2,0 | 100 | 0 | 100 |
| 1200 | 1,2 | 100 | 40 | 100 |
| | 1,5 | 100 | 20 | 100 |
| | 1,8 | 100 | 5 | 100 |
| | 2,1 | 100 | 1 | 100 |
| | 3,25 | 100 | 0 | 100 |
| 1260 | 2,1 | 100 | 1 | 100 |

Die Versuche zeigen, daß bei Verwendung von Hüttenwerkstäuben zum Verschlacken von P das erforderliche Fe : P-Molverhältnis bei 1000°C ca. 1,5 und bei höherer Temperatur ca. 2,0 beträgt. In allen Fällen wurden sowohl Zn als auch Pb vollständig verflüchtigt, so daß der Wälzprozeß durch das Mitverarbeiten von Phosphatierschlamm nicht nachteilig beeinflußt wird.

Auch bei relativ hohen Temperaturen von bis zu 1300°C, wie sie z.B beim Wälzverfahren maximal auftreten können, sind die gebildeten Fe-P-Verbindungen stabil und es wird bei hinreichend hohem Fe : P-Molverhältnis kein P verflüchtigt.

Eine Röntgen-Diffraktometer-Analyse ergab, daß durch den hohen Sandüberschuß das im Hüttenwerkstaub enthaltene Ca vollständig als Silikat vorlag. Ca-Phosphat wurde nicht nachgewiesen. Der Phosphor lag nur in Form verschiedener Fe-Phosphide vor. Die Schlacke enthielt keine eluierfähigen Bestandteile und kann z.B. im Straßen- und Wegebau Verwendung finden.

**Beispiel 3**

Es wurde vergleichend zu Beispiel 1 gearbeitet, wobei nur der Zuschlagstoff ausgetauscht wurde. Anstelle von reinem $Fe_2O_3$ wurde reines $CaCO_3$ verwendet. Parallelversuche mit $BaCO_3$, welche hier nicht aufgelistet werden, ergaben, daß Ba und Ca gleichartig reagieren. Das in der Tabelle 3 angegebene Ca kann demnach ganz oder teilweise im molaren Verhältnis durch Ba ersetzt werden. Der eingesetzte Phosphatierschlamm enthielt einen Fe-Eigengehalt entsprechend einem Fe : P-Molverhältnis von 0,5, außerdem noch geringe Mengen an Na und Mg.

8

Tabelle 3

| Temperatur °C | Molverhältnis Ca : P | Verflüchtigung | |
|---|---|---|---|
| | | Zn[%] | $P_2O_5$[%] |
| 900 | 0 | 11 | 6 |
| | 0,5 | 30 | 2 |
| | 0,75 | 68 | 1 |
| | 1,0 | 93 | 0 |
| | 1,5 | 91 | 1 |
| 950 | 0 | 39 | 18 |
| | 0,5 | 59 | 4 |
| | 0,75 | 76 | 0 |
| | 1,0 | 98 | 0 |
| 1000 | 0 | 100 | 44 |
| | 0,5 | 100 | 18 |
| | 0,75 | 99 | 5 |
| | 1,0 | 99 | 1 |
| 1100 | 0 | 100 | 78 |
| | 0,75 | 100 | 23 |
| | 1,0 | 100 | 7 |
| | 1,13 | 100 | 1 |
| | 1,25 | 99 | 1 |
| | 1,5 | 98 | 0 |
| 1200 | 0 | 100 | 78 |
| | 0,75 | 100 | 31 |
| | 1,0 | 100 | 15 |
| | 1,13 | 100 | 7 |
| | 1,25 | 99 | 2 |
| | 1,5 | 98 | 0 |

Die Versuche zeigen, daß mit zunehmender Temperatur der Ca-Bedarf steigt. Das liegt einerseits am unterschiedlichen Verhalten des Fe. Dieses bildet mit zunehmender Temperatur immer eisenreichere Fe-P-Verbindungen, wodurch immer weniger P an das Fe gebunden wird. Es verbleibt demnach immer mehr nicht an Fe gebundenes und von Ca abzubindendes P, was den mit steigender Temperatur zunehmenden Ca-Bedarf verursacht. Andererseits wird ein Einfluß von anderen, in geringerem Maße im Phosphatierschlamm vorliegenden Verbindungen wie z.B Na oder Mg ausgeübt, welche weniger temperaturbeständige P-Verbindungen bilden. Diese zersetzen sich mit zunehmender Temperatur, so daß entsprechend der Ca-Bedarf ansteigt. Zusammenfassend ergibt sich demnach, daß nur für Temperaturen $\geq$ 1100°C ein eindeutiger Ca-Bedarf angegeben werden kann. Theoretisch beträgt er:

$$\text{Mole Ca-Bedarf} = \text{Mole} \left(P - \frac{Fe}{2}\right)$$

In der Praxis sollte ein Überschuß angewendet werden. Bei niedrigerer Temperatur kann der Ca-Zusatz niedriger ausfallen, was im Betrieb zweckmäßigerweise experimentell überprüft wird.

**Patentansprüche**

1. Verfahren zur Entfernung von Zink aus Phosphatierschlämmen bei erhöhten Temperaturen sowie unter reduzierenden Bedingungen und in Gegenwart von Zuschlagstoffen, dadurch gekennzeichnet, daß man die Phosphatierschlämme mit Zuschlagstoffen, die mit der Phosphorkomponente der Phosphatierschlämme bei erhöhter Temperatur schlackenartige (feste, nichtflüchtige) Eisen-, Kalzium- und/oder Bariumverbindungen zu bilden vermögen, vermischt und bei mindestens 800°C umsetzt, wobei man zur Bildung von Fe-Verbindungen mindestens ein Fe : P-Molverhältnis von 1,0 bei einer Reaktionstem-peratur von $\leq$ 950°C, von 1,5 bei einer Reaktionstemperatur von 950 - 1050°C und 2,0 bei $\geq$ 1050°C

EP 0 520 524 B1

und zur Bildung von Ca- und/oder Ba-Verbindungen ein Molverhältnis von Ca : P bzw. Ba : P von mindestens 1,5 einstellt.

2. Verfahren nach Anspruch 1, dadurch gekennzeichnet, daß man die Phosphatierschlämme zur Bildung von möglichst konzentriertem Eisenphosphid mit hocheisenhaltigen oxidischen Verbindungen wie Eisenerz, Eisenoxid, Walzenzunder und/oder Schrott umsetzt.

3. Verfahren nach Anspruch 1 oder 2, dadurch gekennzeichnet, daß man die Phosphatierschlämme zur Bildung von Eisenverbindungen mit Hüttenwerkstäuben als Zuschlagstoff umsetzt.

4. Verfahren nach Anspruch 1, 2 oder 3, dadurch gekennzeichnet, daß man die vermischten Phosphatierschlämme/Zuschlagstoffe zu Pellets, Briketts o.ä. kompaktiert.

5. Verfahren nach einem oder mehreren der Ansprüche 1 bis 4, dadurch gekennzeichnet, daß man die reduzierenden Bedingungen mit Hilfe von festen Brennstoffen herstellt.

6. Verfahren nach Anspruch 5, dadurch gekennzeichnet, daß man die festen Brennstoffe mit den Phosphatierschlämmen und den Zuschlagstoffen vermischt.

7. Verfahren nach einem oder mehreren der Ansprüche 1 bis 6, dadurch gekennzeichnet, daß man die Mischung aus Phosphatierschlämmen, Zuschlagstoffen und festen Brennstoffen zu Pellets, Briketts o.ä. kompaktiert.

8. Anwendung des Verfahrens nach einem oder mehreren der Ansprüche 1 bis 7 innerhalb des Wälzprozesses zur Aufarbeitung von Hüttenwerkstäuben.

**Claims**

1. A method for removing zinc from phosphating sludges at elevated temperatures and under reducing conditions and in the presence of additions, characterised in that the phosphating sludges are mixed with additions which are capable of forming slag-like (solid, non-volatile) iron, calcium and/or barium compounds with the phosphorus component of the phosphating sludges at elevated temperature, and are reacted at at least 800 °C, wherein at least an Fe : P molar ratio of 1.0 at a reaction temperature of $\leq$ 950 °C, of 1.5 at a reaction temperature of 950 - 1050 °C, and 2.0 at $\geq$ 1050 °C is set in order to form Fe compounds, and a molar ratio of Ca : P or Ba : P of at least 1.5 is set in order to form Ca and/or Ba compounds.

2. A method according to Claim 1, characterised in that the phosphating sludges are reacted with high iron-content oxidic compounds such as iron ore, iron oxide, roll scale and/or scrap in order to form iron phosphide which is as concentrated as possible.

3. A method according to Claim 1 or 2, characterised in that the phosphating sludges are reacted with metallurgical dusts as addition in order to form iron compounds.

4. A method according to Claim 1, 2 or 3, characterised in that the mixed phosphating sludges/additions are compacted to pellets, briquettes or the like.

5. A method according to one or more of Claims 1 to 4, characterised in that the reducing conditions are produced with the aid of solid fuels.

6. A method according to Claim 5, characterised in that the solid fuels are mixed with the phosphating sludges and the additions.

7. A method according to one or more of Claims 1 to 6, characterised in that the mixture consisting of phosphating sludges, additions and solid fuels is compacted to form pellets, briquettes or the like.

8. The application of the method according to one or more of Claims 1 to 7 in the Waelz process for processing metallurgical dusts.

10

**Revendications**

1. Procédé destiné à éliminer du zinc des bornes de phosphatation sous haute température ainsi que sous des conditions réductrices et en présence d'agrégats, caractérisé en ce qu'on mélange les boues de phosphatation à des agrégats qui peuvent à température élevée former avec les composés phosphores des boues de phosphatations, des composés de fer, de calcium et/ou de baryum du type scorie (solide, non volatil) et on les fait réagir à au moins 800°C, dans lequel, pour former des composés de fer, on règle le rapport molaire Fe : P à au moins 1,0 pour une température de réaction inférieure ou égale à 950°C, à 1,5 pour une température de réaction de 950 à 1050°C et à 2,0 pour une température de réaction supérieure ou égale à 1050°C et pour former des composés de calcium et/ou de baryum, on règle un rapport molaire de Ca : P (ou Ba : P) à au moins 1,5.

2. Procédé suivant la revendication 1, caractérisé en ce qu'on fait réagir les bornes de phosphatations de façon à former du phosphure de fer le plus concentré possible avec des composés ayant une haute teneur en fer oxidé comme du mineral de fer, de l'oxyde de fer, de la calamine de laminage et/ou de la ferraille.

3. Procédé suivant la revendication 1 ou 2, caractérisé en ce qu'on fait réagir les bornes de phosphatations afin de former des composés de fer avec des poussières d'usine sidérurgique en tant qu'agrégats.

4. Procédé suivant la revendication 1, 2 ou 3, caractérisé en ce qu'on compacte à la presse le mélange boues de phosphatation/agrégats sous forme de pastilles, de briquettes ou analogues.

5. Procédé suivant l'une ou plusieurs des revendications 1 à 4, caractérisé en ce qu'on réalise les conditions de réduction à l'aide de combustibles solides.

6. Procédé suivant la revendication 5, caractérisé en ce qu'on mélange les combustibles solides aux boues de phosphatation et aux agrégats.

7. Procédé suivant l'une ou plusieurs des revendications 1 à 6, caractérisé en ce qu'on compacte à la presse le mélange des boues de phosphatations, des agrégats et des combustibles solides sous forme de pastilles, briquettes ou analogues.

8. Utilisation du procédé suivant l'une ou plusieurs des revendications 1 à 7 dans un procédé de Waelz pour le retraitement des poussières d'usine sidérurgique.